# EUROPEAN PATENT APPLICATION

(11) **EP 4 786 958 A1**
(43) Date of publication of application: **05.08.2026**
(21) Application number: 25155692.4
(22) Date of filing: 04.02.2025
(51) Int. Cl.: G01N 21/65, G01J 3/44

(54) **ADJUSTING A DISPERSIVE DEVICE FOR SPECTROSCOPIC MICROSCOPY**

(71) Applicant: CellSense Technologies GmbH, 12489 Berlin (DE)
(72) Inventor: Jähnke, Torsten, 15732 Schulzendorf (DE); Oliynyk, Vitaliy, 15711 Königs Wisterhausen (DE); Schlüssler, Raimund, 01309 Dresden (DE)
(74) Representative: Steffens, Adrian

(57) **Abstract**

A method for adjusting a dispersive device (14) for spectroscopic microscopy is disclosed. The method comprises: providing light from a monochromatic light source (10) to a detector (15) via a dispersive device (14) with an optical resonator (20); varying at least one optical length parameter of the dispersive device (14), the at least one optical length parameter comprising a thickness of the optical resonator (20) and/or a refractive index of the optical resonator (20), and determining, by the detector (15), detected data indicative of a diffraction maximum; determining at least one of a width and an intensity of the diffraction maximum for varied values of the at least one optical length parameter; determining an adjustment setting for the at least one optical length parameter for which: the intensity is above a first threshold value and/or the width is below a second threshold value, and a coupling angle of the diffraction maximum is minimized up to a safety margin; performing spectroscopic microscopy using scattered light which is scattered from a sample (12) and passes the dispersive device (14), wherein the dispersive device (14) is adjusted with the adjustment setting. Further, a corresponding system for adjusting a dispersive device (14) for spectroscopic microscopy is disclosed. (Fig. 3)

## Description

The present disclosure refers to a method and a system for adjusting a dispersive device for spectroscopic microscopy.

### Background

While single-cell analysis provides critical insights, traditional two-dimensional cell cultures often fail to replicate the complex architecture of tissues in vivo. As a response to these limitations, researchers have turned to three-dimensional cell culture techniques, which more accurately mimic the spatial and functional characteristics of native tissues. Spheroids are organized aggregates of cells that can self-assemble from single cells. They represent a simplified model of tissue architecture, allowing for the study of cell-cell interactions, drug responsiveness, and cellular behavior in a more physiologically relevant context. Spheroids are widely used in cancer research to evaluate tumor growth, invasion, and therapeutic responses. Organoids take this concept further by introducing a more complex structure that resembles the native tissue from which they are derived. They are three-dimensional structures formed from stem or progenitor cells and can replicate key aspects of organ physiology, including tissue architecture, cellular diversity, and functional properties. Organoids have been increasingly utilized for drug screening, personalized medicine, and understanding disease mechanisms, particularly in areas like gastrointestinal diseases, neurological disorders, and regenerative medicine. The next level is the study of real tissues or small organisms such as zebrafish or C elegans as model systems in biology.

The progression from single-cell analyses to three-dimensional culture systems has transformed various fields of biological and medical research. These advanced models provide invaluable preclinical platforms for evaluating drug efficacy and toxicity, studying cellular mechanisms in development and disease, and testing potential therapeutic approaches in a more relevant physiological context. In summary, the integrated study of single cells, spheroids, organoids and real tissues represents a paradigm shift in biology and medicine, enhancing the ability to understand and ultimately treat complex diseases by closely mimicking the in-vivo environment.

To characterize these types of objects, the size of which is in the millimeter range, classical microscopy methods such as brightfield, phase contrast, differential interference contrast, or fluorescence methods can be used. Recent methods such as super-resolution or light-sheet microscopy can also be applied. To learn more about chemical compositions or mechanical properties, methods such as Raman microscopy or Brillouin microscopy can be used.

Brillouin microscopes and Raman microscopes utilize spectrally dispersive devices to create an angular dispersion of the different frequency components of the light incident to the Brillouin spectrometer.

### Summary

It is an object of the present disclosure to provide techniques for adjusting such dispersive devices that enable increased accuracy when performing spectroscopic microscopy such as Brillouin or Raman microscopy.

For solving the problem, a method and a system for adjusting a dispersive device for spectroscopic microscopy according are provided according to the independent claims. Further embodiments are disclosed in dependent claims.

According to one aspect, a method for adjusting a dispersive device for spectroscopic microscopy is provided. The method comprises:
- providing light from a monochromatic light source to a detector via a (spectrally) dispersive device with an optical resonator;
- varying (and/or changing and/or adjusting) at least one optical length parameter of the dispersive device, the at least one optical length parameter comprising a thickness of the optical resonator and/or a refractive index (of an optical medium) of the optical resonator, and determining, by the detector, detected data indicative of a (of at least one) diffraction maximum;
- determining at least one of a width and an intensity of the (at least one) diffraction maximum for varied (changed, adjusted) values of the at least one optical length parameter (from the detected data);
- determining an (optimum) adjustment setting for the at least one optical length parameter for which:
   - the intensity is above a first threshold value and/or the (angular / coupling angular) width is below a second threshold value, and
   - preferably, a coupling angle (input coupling angle, incident angle) of (for) the diffraction maximum is minimized, more preferably up to a safety margin (i.e., the coupling angle is smallest, up to the safety margin, while the maximum intensity is above the first threshold value and/or the width is below the second threshold value);
   - performing spectroscopic microscopy using scattered light which is scattered from a sample and passes (through) the dispersive device, wherein the dispersive device is adjusted with the adjustment setting.

According to another aspect, a system for adjusting a dispersive device for spectroscopic microscopy is provided, the system being configured to carry out the above method. The system may comprise at least one of a light source, a dispersive device, a detector, and a data processing unit. The system may comprise further components or microscope elements, in particular an optical fiber, an optical coupler, a beam splitter, a mirror, an objective, a sample container, a (sample) stage, an illumination unit, a condenser, a camera.

The diffraction maximum may correspond to or be indicated by a peak or a (circular or striped) interference fringe in the detected data, in particular in a detected image and/or a spectrum. The diffraction maximum may be indicative of a zeroth, first, or second diffraction order. The order of the diffraction maximum may be determined, e.g., by fitting and comparing with a theoretical distribution. The detected data and/or the detected image and/or the spectrum may comprise and/or indicate one diffraction maximum or more diffraction maxima. The diffraction maximum may be a diffraction maximum with smallest coupling angle (with respect to one or more further diffraction maxima).

The adjustment setting may be determined such that resonant light in the optical resonator does not hit a transition area between a first mirror wall and an entry window of the optical resonator. In particular, the adjustment setting may be determined such that a coupling angle (an input coupling angle, an incident angle) of the light in the optical resonator is greater than and/or not less than a minimum (input) coupling angle of the optical resonator. The minimum coupling angle may depend on a length of the transition area, e.g. on an angular aperture of the transition area with respect to a second mirror wall opposite to the transition area. The minimum coupling angle may be a coupling angle below which (resonant) light will hit the transition area.

The method may comprise determining a diffraction order of the diffraction maximum, for example, by fitting and/or comparing with predetermined (e.g., theoretical) data. The method may comprise determining the minimum coupling angle from the adjustment setting (for the at least one optical length parameter). The adjustment setting may correspond to an optimum (input) coupling angle which is greater than the minimum coupling angle.

The (optimum) adjustment setting may comprise and/or indicate at least one of an (optimum) temperature of the optical resonator, an (optimum) thickness of the of the optical resonator, and an (optimum) pressure within the optical resonator.

The method may comprise determining the coupling angle (of the light in the optical resonator), in particular for varied values of the at least one optical length parameter. The coupling angle may correspond to an incident angle of light in the optical resonator. The coupling angle may further correspond to an angle with which light is reflected within the optical resonator. There may be a correspondence between the coupling angle and a position in the detected data, e.g., in the spectrum. In other words, each position in the spectrum may correspond to a coupling angle. Determining such a correspondence and/or determining the coupling angle as such is known in the art. A concrete value for the coupling angle need not be known as such for determining that the coupling angle for the diffraction maximum is minimized and/or smallest or smaller than another coupling angle for the diffraction maximum at another position in the detected data, in particular in the spectrum. For example, distances between a plurality of diffraction maxima becoming smaller (in the detected data / in the spectrum) may indicate increasing coupling angles.

The intensity of the diffraction maximum may be a maximum intensity value of the diffraction maximum. The width of the diffraction maximum may for example be a full width at half maximum value (FWHM) of the diffraction maximum (in an angular direction).

A tilting angle of the optical resonator may be fixed (during varying of the at least one optical length parameter).

The at least one optical length parameter may be varied by varying (e.g. adjusting) a temperature of the optical resonator. In particular, the thickness (e.g., comprising a distance between mirror walls of the optical resonator) and/or the refractive index may be varied by varying the temperature.

The optical medium (of the optical resonator), in particular between the mirror walls of the optical resonator, may be thermally expandable. For example, the optical medium may have a linear coefficient of thermal expansion between 10⁻⁷/K and 10⁻⁴/K, preferably between 5 × 10⁻⁷/K and 5 × 10⁻⁶/K (at an operating temperature (of the optical resonator), in particular at an operating temperature between 20 °C and 80 °C). A small linear coefficient of thermal expansion may allow for precise tuning of the thickness.

The optical medium may be a solid, e.g., comprise at least one of quartz glass, borosilicate glass, sapphire, and plastic.

The refractive index (of the optical medium) may be temperature dependent. For example, the optical medium may have a refractive index temperature coefficient between 10⁻⁶/K and 5 × 10⁻⁵/K, preferably between 5 × 10⁻⁶/K and 10⁻⁵/K (at an operating wavelength, preferably between 300 nm and 2000 nm (preferably between 770 nm and 790 nm, more preferably at 780.24 nm), and an operating temperature (e.g. between 20°C and 80 °C, in particular at 20 °C)).

Varying the temperature may preferably comprise (successively) increasing the temperature. Thus, simpler control may be provided and condensation processes may be avoided. Alternatively, varying the temperature may comprise (successively) decreasing the temperature. Adjusting the temperature may start at an initial temperature, e.g., at room temperature.

The temperature may be varied within a temperature range having a length between 5 K and 60 K, preferably between 5 K and 10 K.

The temperature may be varied using a heating device and/or a cooling device, preferably coupled with and/or contained in the dispersive device. The heating device and/or the cooling device may be connected to the data processing unit.

The thickness of the optical resonator may be varied by an actuator arranged at the optical resonator, preferably a piezoelectric actuator. The actuator may be configured to control and/or change and/or vary the thickness of the optical resonator (e.g., in sub-nanometer steps). For example, the thickness may be varied with a step size between 0.1 nm and 100.0 nm per step, preferably between 1 nm and 10 nm per step. Further, the actuator may be connected to the data processing unit. The actuator may be connected to the data processing unit.

The optical medium may also be a gas (e.g., air) or a liquid.

The thickness of the optical resonator may be varied by varying a pressure within (of an optical medium in) the optical resonator, preferably a pressure of a gas in the optical resonator (between the mirror walls).

The pressure may be varied using a pressure device, preferably coupled with and/or contained in the dispersive device. The pressure device may be connected to the data processing unit.

The thickness may be varied by an offset value between 1 nm and 3000 nm, preferably between 1 nm and 1000 nm.

Adjusting the thickness may comprise varying a distance between the mirror walls (of the optical resonator).

In general, the at least one optical length parameter may be varied by at least one of varying the temperature of the optical resonator, varying a pressure within (of the optical medium in) the optical resonator and controlling an actuator arranged at the optical resonator. Varying the at least one optical length parameter may comprise scanning/passing through a parameter range for at least one of the temperature, the pressure, the at least one optical length parameter, and the thickness.

At least one of the temperature, the pressure, the at least one optical length parameter, and the thickness may be varied monotonically, e.g., monotonically increasing or monotonically decreasing.

The first threshold may be between 90 % and 99 %, preferably between 95 % and 99 %, of a maximum intensity over the (over all) varied values of the at least one optical length parameter. The second threshold may be between 101 % and 110 %, preferably between 101 % and 105 %, of a minimum width over the (over all) varied values of the at least one optical length parameter.

The first threshold and/or the second threshold may be fixed or be dependent on the coupling angle, e.g., to compensate for an angular dependency of light intensity or peak width being detected at or by the detector. Additionally or alternatively, the method comprise providing the detected data including the diffraction maximum in a frequency domain (e.g., using a corresponding data transformation). The width of the diffraction maximum may then be determined in the frequency domain. Determining the width may comprise fitting the diffraction maximum, e.g., using a Lorentz curve.

The dispersive device may comprise or be a virtually imaged phased array (VIPA) or a Fabry-Pérot resonator. Thus, high spectral resolution may be achieved when performing microscopy.

The optical resonator, in particular the VIPA or the Fabry-Pérot resonator may for example have a finesse between 5 and 200. The optical resonator, in particular the VIPA or the Fabry-Pérot resonator may have a free spectral range between 1 GHz and 100 GHz.

The method according to any of the preceding claims, wherein the scattered light is at least one of Brillouin-scattered light, Raman-scattered light, and Rayleigh-scattered light.

The spectroscopic microscopy may comprise Brillouin microscopy or Raman microscopy. In general, the spectroscopic microscopy may comprise inelastic light scattering microscopy and/or optical phonon microscopy, in particular involving acoustic phonons (Brillouin microscopy) or optical phonons (Raman microscopy). The spectroscopic microscopy may comprise determining at least one of a Brillouin shift, a Brillouin width, a Raman shift, and a Raman width. Further, the spectroscopic microscopy may comprise scanning the sample with the light along a plurality of scanning areas (pixels). A total number of scanning areas for scanning the sample may be between 10¹ and 10¹⁰, preferably between 10² and 10⁶, more preferably between 10⁴ and 10⁵.

The sample may be a biological sample comprising at least one of a cell, a part of a cell, cellular tissue, and an organoid. The sample may be arranged in a medium. The medium may comprise or be a liquid. The medium may also comprise or be a gel. The medium may comprise at least one of a culture medium, a growth medium, a liquid nutrient medium, a lysogeny broth medium, agar, glucose, salts, water, and amino acids.

The light may be laser light. The light and/or the laser light may have a (central) wavelength between an input laser light wavelength of input laser light for the spectroscopic microscopy (corresponding to a wavelength of corresponding Rayleigh-scattered light) and an expected scattering wavelength of inelastically scattered light (e.g., the Brillouin-scattered light or the Raman-scattered light). In particular, the light and/or the laser light may have a (central) wavelength at the input laser light wavelength or at the expected scattering wavelength of inelastically scattered light. Hence, the dispersive element may be adjusted in view of a specific wavelength of interest for microscopy. The light and/or the laser light may also have a (central) wavelength in-between (e.g., in the middle of) the input laser light wavelength and the expected scattering wavelength of inelastically scattered light. Thus, both elastically and inelastically scattered light may be detected with a certain degree of precision.

The expected scattering wavelength (of the inelastically scattered light) may be an average expected wavelength. The expected scattering wavelength may be determined in view of the sample (to be analyzed) and/or from a type of scattering (e.g., Brillouin scattering or Raman scattering).

The monochromatic light source may be a light source (in particular a laser source) used for performing the spectroscopic microscopy. Preferably, the light (entering the dispersive device) may be free of scattered light (from the sample). Alternatively, the light (entering the dispersive device) may also comprise scattered light (scattered from the sample). The input laser light for performing the spectroscopic microscopy may be the (same) light from the monochromatic light source.

The light may be (configured to) induce elastic light scattering (e.g., Rayleigh scattering) and/or inelastic light scattering, in particular Brillouin scattering or Raman scattering. The scattered light may thus be indicative of Brillouin scattering or Raman scattering. The light and/or the scattered light may be received in the detector.

The wavelength (of the light) may be between 300 nm and 2000 nm, preferably between 350 nm and 1200 nm, more preferably between 600 nm and 800 nm or between 770 nm and 790 nm. Thus, phototoxic irradiation can be avoided when performing microscopy of biological samples.

The light may have a line width less than 1 MHz (corresponding to 2 fm in terms of wavelength at, e.g., 780.24 nm central wavelength), preferably less than 100 kHz (corresponding to 0.2 fm in terms of wavelength at 780.24 nm central wavelength).

Determining the adjustment setting may comprise determining a plurality of intermediate adjustment settings for which the intensity is above the first threshold value and/or the width is below the second threshold value and, preferably, (subsequently) determining the adjustment setting from the intermediate adjustment settings such that the coupling angle for the diffraction maximum is minimized (up to the safety margin).

Determining the adjustment setting from the intermediate adjustment settings such that the coupling angle is minimized (up to the safety margin) may comprise selecting a smallest coupling angle (up to the safety margin) from (all) intermediate coupling angles corresponding to the intermediate adjustment setting. Determining the adjustment setting from the intermediate adjustment settings such that the coupling angle is minimized (up to the safety margin) may also comprise determining and/or selecting one of the intermediate adjustment settings corresponding to the diffraction maximum having an extremal position (outer position, marginal position, e.g., a leftmost, a rightmost, an uppermost, or a lowermost position) within the detected data, e.g., within a detected diffraction image and/or a (detected) spectrum (up to the safety margin).

The intermediate adjustment settings may comprise and/or indicate at least one of intermediate temperatures of the optical resonator, intermediate thicknesses of the optical resonator, and an intermediate pressures within the optical resonator.

Determining the plurality of intermediate adjustment settings may be terminated (concluded) based on (determining) the intensity (of the diffraction maximum) falling below the first threshold value and/or the width exceeding the second threshold value.

The safety margin may comprise and/or correspond to and/or be indicative of at least one of an angular offset, a temperature offset, a pressure offset, and a thickness offset.

In particular, the safety margin may comprise and/or correspond to and/or be indicative of at least one of:
- an angular offset (difference) for the coupling angle between 0.1° and 2° (to a smallest coupling angle, for which the intensity is above the first threshold value and/or the width is below the second threshold value), more preferably between 0.5° and 2°,
- a temperature offset (difference) between 0.1 K and 5 K (to a temperature for which the coupling angle of the diffraction maximum is the smallest coupling angle), preferably between 0.1 K and 1.0 K,
- a pressure offset (difference) between 1 Pa and 10 Pa (to a pressure for which the coupling angle of the diffraction maximum is the smallest coupling angle), and
- a thickness offset (difference) between 1 nm and 100 nm (to a thickness for which the coupling angle of the diffraction maximum is the smallest coupling angle), preferably between 1 nm and 10 nm.

In particular, determining the adjustment setting may in particular comprise determining the plurality of intermediate adjustment settings for which the intensity is above the first threshold value and/or the width is below the second threshold value, and (subsequently) determining the adjustment setting from one of the intermediate adjustment settings having (corresponding to) at least one of:
- a coupling angle greater than a smallest coupling angle (for the intermediate adjustment settings) by an angular offset (difference) for the coupling angle between 0.1° and 2°, more preferably between 0.5° and 2°,
- a temperature offset (difference) between 0.1 K and 5 K (to a temperature for which the coupling angle of the diffraction maximum is the smallest coupling angle), preferably between 0.1 K and 1.0 K,
- a pressure offset (difference) between 1 Pa and 10 Pa (to a pressure for which the coupling angle of the diffraction maximum is the smallest coupling angle), and
- a thickness offset (difference) between 1 nm and 100 nm (to a thickness for which the coupling angle of the diffraction maximum is the smallest coupling angle), preferably between 1 nm and 10 nm.

Additionally or alternatively, determining the adjustment setting may comprise determining the plurality of intermediate adjustment settings for which the intensity is above the first threshold value and/or the width is below the second threshold value and (subsequently) determining the adjustment setting from one of the intermediate adjustment settings having (corresponding to) at least one of:
- a coupling angle at an interval position at between 1 % and 15 % (preferably between 5 % and 10 %) of an interval length of an intermediate adjustment settings interval (corresponding to smallest coupling angles),
- a temperature at a temperature interval position at between 1 % and 15 % (preferably between 5 % and 10 %) or between 85 % and 99 % (preferably between 90 % and 95 %) of an interval length of an intermediate temperatures interval (corresponding to smallest coupling angles),
- a pressure at a pressure interval position at between 1 % and 15 % (preferably between 5 % and 10 %) or between 85 % and 99 % (preferably between 90 % and 95 %) of an interval length of an intermediate pressures interval (corresponding to smallest coupling angles), and
- a thickness at a thickness interval position at between 1 % and 15 % (preferably between 5 % and 10 %) or between 85 % and 99 % (preferably between 90 % and 95 %) of an interval length of an intermediate thicknesses interval (corresponding to smallest coupling angles).

Alternatively, the safety margin may be zero. In this case, the adjustment setting for the at least one optical length parameter is determined such that the coupling angle of the diffraction maximum is minimized.

The method may further comprise:
- providing the light at a second dispersive device (different from the dispersive device) with a second optical resonator;
- varying at least one second optical length parameter of the second dispersive device, the at least one optical length parameter comprising a second thickness of the second optical resonator and/or a second refractive index (of a second optical medium) of the second optical resonator, and determining, by the detector, second detected data indicative of a second diffraction maximum;
- determining at least one of a second width and a second intensity of the second diffraction maximum for varied values of the at least one second optical length parameter (from the second detected data); and
- determining a second (optimum) adjustment setting for the at least one second optical length parameter for which the second intensity is above a third threshold value and/or the second (angular / coupling angular) width is below a fourth threshold value.

Further, the method may comprise performing spectroscopic microscopy using scattered light which is scattered from a sample and passes the dispersive device and the second dispersive device, wherein the dispersive device is adjusted with the adjustment setting and the second dispersive device is adjusted with the second adjustment setting. By employing a second dispersive device, the signal-to-noise ratio during microscopy may be further increased.

The light and/or the scattered light may pass the second dispersive device after passing the (first) dispersive device. A (cylindric) lens may be arranged between the dispersive device and the second dispersive device (for focusing output light of the dispersive device at the second dispersive device). The second optical resonator may be rotated with respect to the optical resonator by an angle between 10° and 170°, preferably 90°.

Properties of the dispersive device and/or quantities in connection with the dispersive device may be correspondingly provided for the second dispersive device and/or quantities in connection with the second dispersive device. Further, the properties in connection with the first threshold value may apply correspondingly for the third threshold value and properties in connection with the second threshold value correspondingly for the fourth threshold value.

The adjustment setting and the second adjustment setting may be determined separately or simultaneously. During the determining of the second adjustment setting, the light may also be directly provided to the second dispersive device (i.e., not pass the dispersive device). Conversely, during the determining of the adjustment setting, the light may also be directly provided to the dispersive device (i.e., not pass the second dispersive device). Alternatively, the light may pass both the dispersive device and the second dispersive device during the determining of the adjustment setting and/or the second adjustment setting, in particular for simultaneous adjustment.

Further, a third dispersive device with a third optical resonator may be provided (subsequent to the second dispersive device). Its properties may analogously correspond to the properties of the dispersive device and/or the second dispersive device. The dispersive device and the second dispersive device, as well as the second dispersive device and the third dispersive device, may for example be rotated with respect to each other by an angle between 10° and 170°, preferably 60°.

The detector may comprise a sensor, preferably being one of a CCD sensor, an EMCCD sensor, a CMOS sensor, and an sCMOS sensor. The detector and/or the sensor may be connected to and/or communicatively coupled with the data processing unit.

The thickness of the optical resonator may be between 1 mm and 50 mm. The length of the transition area may be between 20 µm and 200 µm. The length of the entry window may be between 1 mm and 30 mm. The length of the first mirror wall may be between 5 mm and 50 mm.

The data processing unit may comprise at least one processor and at least one memory. The data processing unit may be embodied in a single device. For example, the data processing unit may be a data processing device, such as a computer or a microcontroller. The data processing unit may also be distributed over a plurality of data processing devices.

Steps described above may be carried out (at least partially) in the data processing unit, for example at least one of (but not restricted thereto): determining at least one of a width and an intensity of the diffraction maximum and determining the adjustment setting.

The embodiments described above in connection with the method for adjusting a dispersive device for spectroscopic microscopy may be provided correspondingly for the system for adjusting a dispersive device for spectroscopic microscopy. In the context of this disclosure, interval information (e.g., "between ... and", "from ... to") is to be understood as including the interval ends. Further, the expression "at least one of" may also include the combination of all respective elements. In general, terms such as "first" or "second" are for descriptive purposes only and should not be understood as indicating or implying relative importance or implying a quantity of indicated technical features.

### Brief description of drawings

In the following, embodiments, by way of example, are described with reference to drawings.
- Fig. 1: shows a graphical representation of a system for spectroscopic microscopy.
- Fig. 2: shows a graphical representation of an optical resonator of a dispersive device.
- Fig. 3: shows another graphical representation of an optical resonator of a dispersive device.
- Fig. 4: shows a graphical representation of a system adjusting a dispersive device for spectroscopic microscopy.
- Fig. 5: shows a plurality of spectra detected by a detector.

### Detailed description

### Spectroscopic microscopy

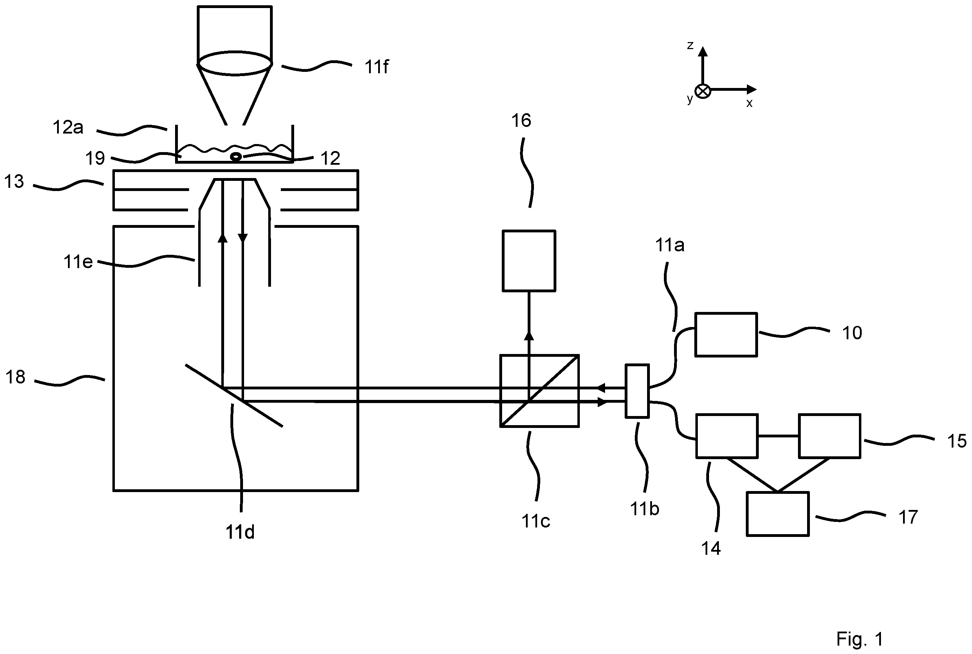

Fig. 1 shows a graphical representation of a system for spectroscopic microscopy such as Brillouin microscopy or Raman microscopy. Laser light from a light source or laser source 10, e.g., a laser, is directed via optical elements 11a-11e (in particular, an optical fiber 11a, an optical coupler 11b, a beam splitter 11c, a mirror 11d, and an objective 11e) towards a sample 12 (specimen) such as a cell in a medium 19 located in a sample container 12a, e.g., a Petri dish, a slide, a well plate, or a well from a well plate. The sample container 12a is arranged on a stage 13, which is movable in an x- and a y-direction (parallel to a stage surface along which the stage 13 extends). The objective 11e, e.g., an objective lens, is movable in a z-direction (orthogonal to the surface along which the stage 13 extends) and provides focus for the laser light, resulting in focused laser light in scanning areas along the sample 12. Alternative to the stage 13 being movable, the objective 11e (together with mirror 11d) and a surrounding casing 18 may be movable in an x- and a y-direction.

The objective 11e may have a high numerical aperture (NA). For most biological and soft-matter samples, air-objectives or immersion-objectives with numerical aperture in the range between 0.5 to 1.25 are used.

Background light is provided from an illumination unit via a condenser 11f. Further mirror elements may be provided for aligning and/or directing laser light and/or scattered light.

Light passing the sample 12 or emitted by the sample 12 including scattered light passes the objective 11e and is fed to a (brightfield) camera 16 for optical observation and/or control and to a detector 15 via a dispersive device 14 (such as a spectrometer). The dispersive device 14 and the detector 15 are connected with a data processing unit 17. A (cylindric) lens may be arranged in front of the dispersive device 14 for focusing the light at the dispersive device 14.

The sample 12 may be observed from below with the objective 11e being arranged below the stage 13 (inverted microscope setup) as shown in Fig. 1. Alternatively, the sample 12 may be observed from above with the objective 11e being arranged above the stage 13 (upright microscope setup - not shown). An inverted microscope is beneficial when working with life samples at the bottom of the sample container 12a, as it minimizes disturbances, e.g., due to light passing water.

For observing the sample 12 and for navigating, brightfield illumination may for example be used. Other contrast methods may be used such as differential interference contrast (DIC) or phase contrast which provide enhanced contrast for nearly optical transparent samples. When the sample 12 is illuminated, it becomes visible against the bright background, which allows for easy alignment and positioning during measurements. For moving the sample 12 relative to a fixed optical focus position in the horizontal (x-y-)plane, the stage 13 is manually movable or motorized. For focusing on a specific sample area in a vertical (z-)direction, a manual or a motorized focus drive may be provided for moving the objective 11e up or down with precise steps in the vertical direction. After finding an area of interest on the sample 12, spectroscopic mapping can start.

The light source / laser source 10 provides (laser) light with a wavelength suitable for Raman scattering or for Brillouin scattering (which for biological samples is typically near-infrared, e.g., 780nm). The laser light is focused on the sample 12 by the objective 11e with, e.g. 20x or 40x magnification and a numerical aperture of 0.5. The laser light has a power typically between 10 mW and 100 mW in the focus of the objective 11e.

Scanning can be carried out by moving the stage 13 in a (raster) scanning manner. To this end, the stage 13 is motorized and controlled by software, e.g., in the data processing unit 17. A typical scanning map of 100 × 100 scanning areas (pixels) with a mash width of 1 µm has a 100 × 100 µm² mapping area. There are different forms of motorized stages 13 with differences in motion controls, mechanical bearings or the choice of mechanical drive as well as the use of a positioning sensor system. For example, the stage 13 may be moved by a stepper motor, a linear motor, or a piezo drive. The stage 13 is configured to accommodate the sample container 12a, e.g., a standard sample holder such as a microscope slide, a Petri dish, a coverslip, a well plate, or other fluid cells.

The detector 15 is configured to capture the scattered light, including elastically scattered light and inelastically scattered light that is frequency-shifted from the laser light. The scattered light is analyzed using the dispersive device 14 to, e.g. resolve Brillouin peaks associated with acoustic phonons in the sample 12. The dispersive device 14 may be based on a virtually imaged phased array (VIPA), which provides sufficient spectral resolution to detect minute frequency shifts of the scattered light due to Brillouin-scattering, which typically is in the range between 0.1 GHz and 50 GHz.

The filtered light by the dispersive device 14 is detected by the detector 15, in particular a sensor of the detector. Photons with different frequency shifts are registered (counted) by different pixels on the sensor. The sensor may be a CCS sensor, a CMPS sensor, an sCMOS sensor, or an EMCCD. The sensor is typically selected so that it provides high sensitivity (typically, a quantum efficiency of 50 % to 95 %), low read noise and dark current noise (both below 2.0 e⁻), and capable of exposure times between 1 ms to 2000 ms. The sensor pixels are typically pre-calibrated to frequency space using one or more separate measurements of samples 12 with known frequency shifts of a Brillouin-peak (for example, laser light with a wavelength of 785 nm provides a shift in pure water of 5.1 GHz, in methanol of 3.6 GHz, and in ethanol of 4.2 GHz.

The determined data provides insights into mechanical properties of the sample 12. The determined frequency shifts are analyzed in the data processing unit 17 using appropriate software tools. Such an analysis allows for determining mechanical parameters such as the speed of sound and the viscoelastic properties of the sample 12. The combination of an inverted microscope setup with brightfield illumination and Brillouin scattering allows for studying the mechanical properties of samples 12 in a non-invasive manner.

### Optical resonator

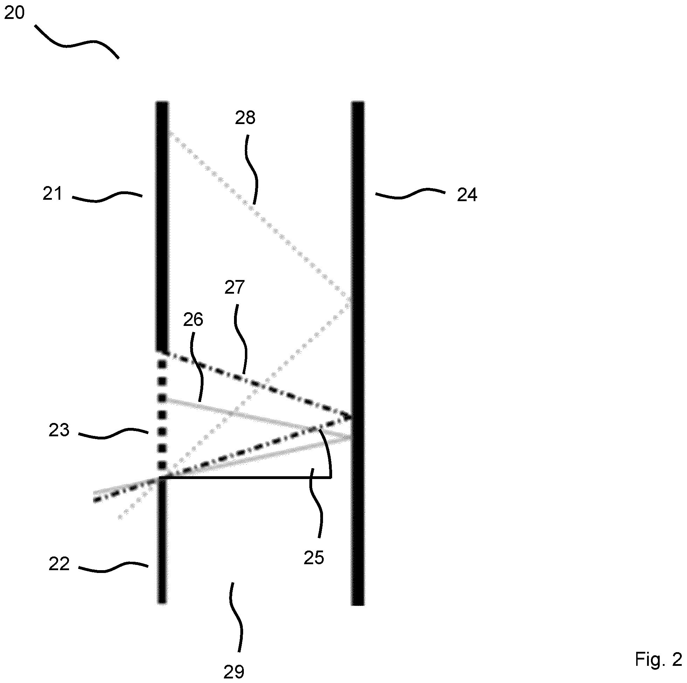

The dispersive device 14 comprises an optical resonator 20 for creating an angular dispersion of different frequency components of the scattered light. Fig. 2 shows a graphical representation of such an optical resonator 20, which may be part of a virtually imaged phased array (VIPA).

The optical resonator 20 comprises multiple parallel surfaces with different reflective coatings: a first mirror wall 21 with completely reflective mirror, an anti-reflex coated entry window 22, a transition area 23 between the first mirror wall 21 and the entry windows 22, and a second mirror wall 24 with a partially reflective output mirror. An optical medium 29 such as quartz glass or air is arranged between the first mirror wall 21 and the second mirror wall 24. Transition areas 23 typically have a length between 50 µm and 100 µm. High quality optical resonators 20 may still have transition areas with a length around 30 µm.

Incoming light enters the optical resonator 20 via the entry window 22. Since an incoming light beam has a non-zero diameter, different light components may incide with different angles. In general, a coupling angle of the input light for constructive interference cannot be freely chosen. Hence, a coupling angle with constructive interference is determined by the given frequency of the input light and optical length parameter of the optical resonator 20 such as its thickness or refractive index.

In case input light (e.g., laser light) coupled into the optical resonator 20 hits the transition area 23 as illustrated by first ray 26, it distorts the light traveling in the optical resonator 20 and prevents an effective coupling into the optical resonator 20. Hence, the optical resonator 20 can be considered to comprise a minimum (input) coupling angle 25 and, for effective coupling, light should be coupled into the optical resonator 20 at angles not smaller than the minimum coupling angle (see second ray 27). The minimum coupling angle 25 is determined by the size of the transition area 23.

On the other hand, large coupling angles as illustrated by third ray 28 are undesired as the dispersion effectiveness reduces with increasing angle and generally degrades the operating performance of the optical resonator 20. As a result, the input light should ideally be coupled into the optical resonator 20 at coupling angles only slightly greater than the minimum coupling angle 25.

Manufacturing variations of optical resonators 20 and VIPAs lead to varying minimum coupling angles. Hence, the minimum coupling angle of a given optical resonator 20 / VIPA may strongly deviate from an achievable coupling angle for light of a given frequency, reducing the performance of the resulting dispersive device 14.

### Adjusting the optical resonator

For providing an improved coupling of the light with a given wavelength/frequency to the optical resonator 20, the coupling angle needs to be greater than but close to the minimum coupling angle 25. For light of a given frequency, this can be achieved by adjusting an optical path length inside the optical resonator 20. To this end, a refractive index of the optical medium 29 and/or a thickness of the optical resonator 20 (a distance between the first mirror wall 21 and the second mirror wall 24) may be adjusted.

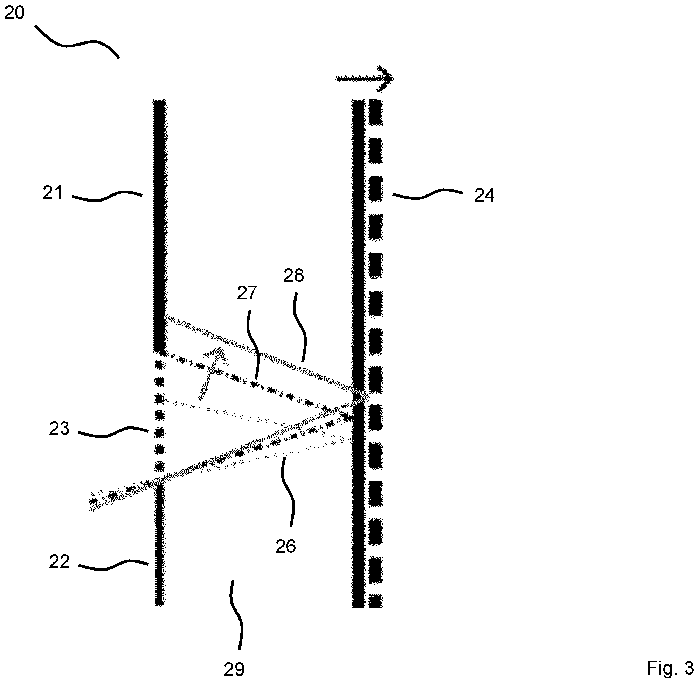

This is illustrated in Fig. 3 by increasing the distance between the first mirror wall 21 and the second mirror wall 24. Thus, there is no constructive interference for light following the first ray 26 which hits the transition area 23, but rather for light following the third ray 28, which instead hits the first mirror wall 21.

The optical path length in the optical resonator 20 (the thickness or refractive index) can be tuned by adjusting optical length parameters and/or adjustment settings of the optical resonator 20, the latter of which include a temperature of the optical resonator 20, a pressure within the optical resonator 20 (in particular in the optical medium 29), and the thickness of the optical resonator 20 itself.

For example, by adjusting the temperature, the optical medium 29 is thermally expanded and the thickness of the optical resonator 20 is increased. In this case, the optical medium 29 may comprise quartz glass and the thickness of the optical resonator 20 may be adjustable. Additionally or alternatively, depending on the optical medium 29 and/or the thickness of the optical resonator being adjustable or non-adjustable, by adjusting the temperature, the refractive index of the optical medium 29 may be adjusted. To this end, the optical medium 29 needs to be temperature dependent. Additionally or alternatively, the thickness of the optical resonator 20 may be adjusted mechanically using, e.g., piezoelectric materials or mechanical translators.

Suitable adjustment settings are specific to each individual optical resonator 20 / VIPA and need to be determined for each optical resonator 20 / VIPA separately. This can be done by tuning the adjustment settings until the optical resonator performance degrades, i.e., until the coupling angle becomes smaller than the minimum coupling angle 25. Adjustment settings are then provided close to the last set of adjustment settings using which good performance was achieved.

Adjusting the optical length parameter may be carried out within a microscope setup as depicted in Fig. 1. Preferably, laser light from the light source / laser source 10 is used directly (i.e., without scattered light) for tuning. However, scattered light can in principle also be used for adjusting the optical length parameter.

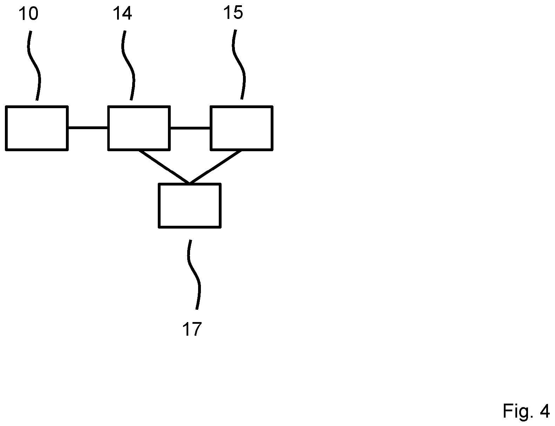

Moreover, the optical length parameter can be adjusted outside the microscope setup in a system comprising a light source 10 (of the microscope or a separate light source), the dispersive device 14, a detector 15 (of the microscope or a separate detector), and a data processing unit 17 (of the microscope or a separate data processing unit). Fig. 4 shows a graphical representation of such a system. Subsequently, the thus adjusted dispersive device 14 / optical resonator 20 may be included in the microscope for performing microscopy. If necessary, the adjustment may be restored by appropriately controlling the relevant operating parameter.

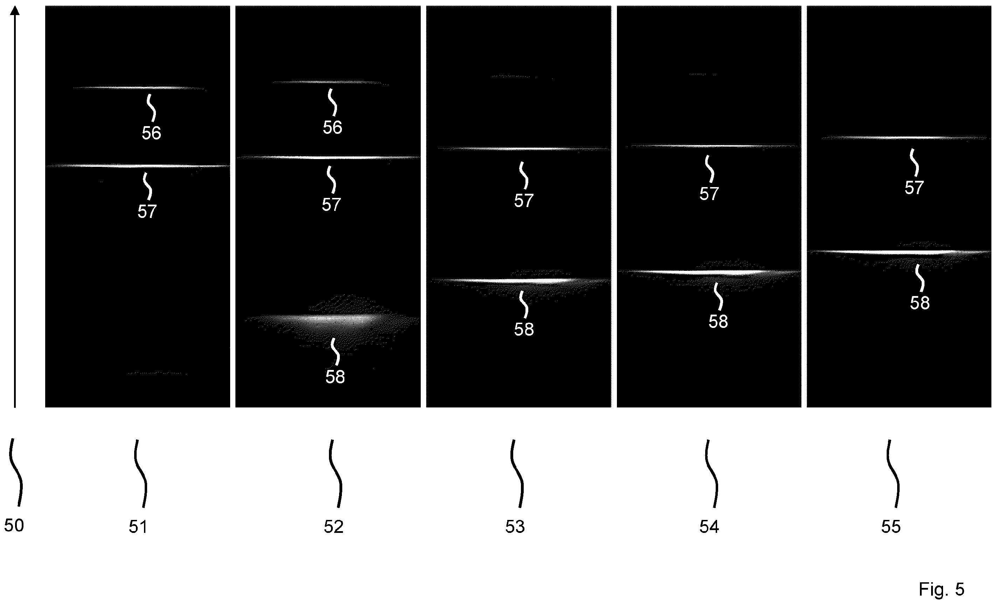

Fig. 5 shows a plurality of spectra 51-55 detected by the detector 15 and comprising a plurality of diffraction maxima 56, 57, 58. Starting with a first spectrum 51 and an initial temperature of 20 °C, the optical length parameter - here: the thickness of the optical resonator 20 - is tuned by successively increasing a temperature of the optical resonator 20 up to a fifth spectrum 55 with a final temperature of 30 °C. Generally, for the optical medium 29 being quartz glass, a temperature increase by 10 K corresponds to an increase of thickness in a range of a few nanometers (30 nm in this case). This results in a change of the optical length in the optical resonator 20 and a corresponding change for constructive interference for coupling angles.

In spectra 51-55, a vertical axis 50 represents increasing coupling angles. In other words, in Fig. 5, smaller coupling angles are at the bottom of the spectra 51-55 and larger coupling angles at the top. The first spectrum 51 comprises a first diffraction maximum 56 and a second diffraction maximum 57, both of which respectively correspond to an interference fringe, or, when for example integrated over the horizontal axis, to a peak. When increasing the temperature, the first diffraction maximum 56 and the second diffraction maximum 57 move towards larger coupling angles. In other words, when increasing the temperature, larger coupling angles are associated with constructive interference in the optical resonator 20. In the second spectrum 52, a third diffraction maximum 58 appears, which corresponds to a zeroth diffraction order. At this point, the third diffraction maximum 58 is rather diffuse. When further increasing the temperature, the third diffraction maximum 58 becomes sharper and has increased intensity.

At the fourth spectrum 54, the third diffraction maximum 58 is sufficiently clear such that its intensity exceeds a first threshold (e.g., 95 % of a maximum (achievable) intensity) and its (angular) width falls below a second threshold (e.g., below 105 % of a minimum (achievable) width). Such a maximum intensity / minimum width may, e.g., be determined from the detected data since the intensities / width remain in a confined range. In particular, when increasing the temperature of the optical resonator 20, the intensity of a diffraction maximum may increase up to a point and subsequently decrease. Further, patterns of the diffraction maxima in the spectra 51-55 are periodical when tuning the optical length of the optical resonator 20.

The temperature corresponding to the further spectrum 54 may already be considered to correspond to an optimum adjustment setting. Optionally, the temperature may be further increased as in the fifth spectrum 55 to provide for a safety margin. When increasing the temperature beyond the temperature corresponding to the fifth spectrum 55, the intensity of the third diffraction maximum 58 will gradually decrease below the first threshold. The set of temperatures from the fourth spectrum 54 to the temperature until the intensity of the third diffraction maximum 58 gradually decreases below the first threshold may represent an intermediate temperatures interval.

In case of employing an additional second dispersive device after the dispersive device 14, a second optical resonator of the second dispersive device may, e.g., be rotated by 90° with respect to the (first) optical resonator 20. A corresponding spectrum will then comprise diffraction maxima as peaks which correspond to intersection areas of interference fringes from the dispersive device 14 and second interference fringes rotated by 90° of the second dispersive device.

The features disclosed in this description, the figures, and/or the claims may be material for the realization of various embodiments, taken in isolation or in various combinations thereof.

### Reference signs

- 10: light source
- 11a: optical fiber
- 11b: optical coupler
- 11c: beam splitter
- 11d: mirror
- 11e: objective
- 12: sample
- 12a: sample container
- 13: stage
- 14: dispersive device
- 15: detector
- 16: camera
- 17: data processing unit
- 18: casing
- 19: medium
- 20: optical resonator
- 21: first mirror wall
- 22: entry window
- 23: transition area
- 24: second mirror wall
- 25: minimum coupling angle
- 26: first ray
- 27: second ray
- 28: third ray
- 29: optical medium
- 50: vertical axis
- 51: first spectrum
- 52: second spectrum
- 53: third spectrum
- 54: fourth spectrum
- 55: fifth spectrum
- 56: first diffraction maximum
- 57: second diffraction maximum
- 58: third diffraction maximum

## Claims

1. A method for adjusting a dispersive device (14) for spectroscopic microscopy, comprising:
- providing light from a monochromatic light source (10) to a detector (15) via a dispersive device (14) with an optical resonator (20);
- varying at least one optical length parameter of the dispersive device (14), the at least one optical length parameter comprising a thickness of the optical resonator (20) and/or a refractive index of the optical resonator (20), and determining, by the detector (15), detected data indicative of a diffraction maximum;
- determining at least one of a width and an intensity of the diffraction maximum for varied values of the at least one optical length parameter;
- determining an adjustment setting for the at least one optical length parameter for which:
- the intensity is above a first threshold value and/or the width is below a second threshold value, and
- a coupling angle of the diffraction maximum is minimized up to a safety margin;
- performing spectroscopic microscopy using scattered light which is scattered from a sample (12) and passes the dispersive device (14), wherein the dispersive device (14) is adjusted with the adjustment setting.

2. The method according to claim 1, wherein the at least one optical length parameter is varied by varying a temperature of the optical resonator (20).

3. The method according to claim 2, wherein an optical medium (29) of the optical resonator (20) at an operating temperature has a linear coefficient of thermal expansion between 5 × 10⁻⁷/K and 5 × 10⁻⁶/K.

4. The method according to claim 2, wherein an optical medium (29) of the optical resonator (20) at an operating temperature and an operating wavelength has a refractive index temperature coefficient between 5 × 10⁻⁶/K and 10⁻⁵/K.

5. The method according to any of claims 2 to 4, wherein the temperature is varied within a temperature range having a length between 5 K and 60 K, preferably between 5 K and 10 K.

6. The method according to any of the preceding claims, wherein the thickness of the optical resonator (20) is varied by an actuator arranged at the optical resonator (20), preferably a piezoelectric actuator.

7. The method according to any of the preceding claims, wherein the thickness of the optical resonator (20) is varied by varying a pressure within the optical resonator (20).

8. The method according to any of the preceding claims, wherein
- the first threshold is between 90 % and 99 % of a maximum intensity over the varied values of the at least one optical length parameter and/or
- the second threshold is between 101 % and 110 % of a minimum width over the varied values of the at least one optical length parameter.

9. The method according to any of the preceding claims, wherein the dispersive device (14) comprises a virtually imaged phased array or a Fabry-Pérot resonator.

10. The method according to any of the preceding claims, wherein the scattered light is at least one of Brillouin-scattered light, Raman-scattered light, and Rayleigh-scattered light.

11. The method according to any of the preceding claims, wherein the light has a wavelength at an input laser light wavelength of input laser light for the spectroscopic microscopy and or at an expected scattering wavelength of inelastically scattered light.

12. The method according to any of the preceding claims, wherein the safety margin corresponds to at least one of:
- an angular offset for the coupling angle between 0.1° and 2°,
- a temperature offset between 0.1 K and 5 K,
- a pressure offset between 1 Pa and 10 Pa, and
- a thickness offset between 1 nm and 100 nm.

13. The method according to any of the preceding claims, further comprising:
- providing the light at a second dispersive device with a second optical resonator;
- varying at least one second optical length parameter of the second dispersive device and determining, by the detector (15), second detected data indicative of a second diffraction maximum;
- determining at least one of a second width and a second intensity of the second diffraction maximum for varied values of the at least one second optical length parameter; and
- determining a second adjustment setting for the at least one second optical length parameter for which the second intensity is above a third threshold value and/or the second width is below a fourth threshold value.

14. The method according to any of the preceding claims, wherein the detector (15) comprises a sensor, preferably being one of a CCD sensor, an EMCCD sensor, a CMOS sensor, and an sCMOS sensor.

15. A system for adjusting a dispersive device (14) for spectroscopic microscopy configured to carry out the method according to any of the preceding claims.
